# EUROPEAN PATENT APPLICATION

(11) **EP 3 041 249 A1**
(43) Date of publication of application: **06.07.2016**
(21) Application number: 15198312.9
(22) Date of filing: 07.12.2015
(51) Int. Cl.: H04N 21/4367, H04N 21/2347, H04N 21/4405, H04N 21/4623, H04N 21/438, H04N 21/4627, H04H 60/23, H04N 21/442

(54) **BROADCAST RECEIVING APPARATUS AND METHOD FOR CONTROLLING THE SAME**

(30) Priority: 29.12.2014 KR 20140192394
(71) Applicant: Samsung Electronics Co., Ltd, Gyeonggi-do 16677 (KR)
(72) Inventor: CHOI, Myung-sik, Gyeonggi-do (KR)
(74) Representative: Appleyard Lees IP LLP

(57) **Abstract**

A broadcast receiving apparatus and a method for controlling the same are provided. According to the exemplary embodiment of the present disclosure, the broadcast receiving apparatus includes: a broadcast signal receiver receiving a broadcast signal; a memory storing the received broadcast signal; an interface unit communicating with an external authentication device; and a memory controller controlling the interface unit to transmit the broadcast signal stored in the memory to the authentication device in a chunk having the a preset size, when a size of the broadcast signal stored in the memory exceeds the preset size.

## Description

### BACKGROUND

### 1. Field

Apparatuses and methods consistent with the present disclosure relate to a broadcast receiving apparatus and a method for controlling the same, and more particularly, to a broadcast receiving apparatus connected to an USB CAM through an USB interface to efficiently and safely transmit and receive broadcast signals and a method for controlling the same.

### 2. Description of the Related Art

With diversification and specialization of broadcast channels, providers providing a good quality of contents with pay TV have increased. A pay TV system necessarily requires an authentication technology for providing broadcast contents only to authenticated users. A user connects authentication devices for authentication to a broadcast receiving apparatus to view pay TV.

Typically, an authentication procedure proceeds for providing pay TV using the authentication devices of a smart card type or a personal computer memory card international association (PCMCIA) card type.

A representative authentication device of the smart card type is an authentication device of an ISO-7816 type. In the authentication device of the ISO-7816 type, broadcast signals such MPEG-TS are not transmitted from the inside of the broadcast receiving apparatus to the outside thereof. A transport stream (TS) incoming from a tuner is directly transmitted to a decorder through a demodulator and a demultiplexer (Demux). However, packets such as an entitlement management message (EMM) or an entitlement control message (ECM) are filtered and then are transmitted to the smart card through an ISO-7816 interface. That is, the EMM packet, the ECM packet, or the like which is subscriber information for viewing pay TV is transmitted to a conditional access system (CAS) S/W. The CAS S/W receiving the EMM packet or the ECM packet communicates with the smart card to transmit a TS key to the broadcast receiving apparatus.

In this case, to support the ISO-7816 interface, the broadcast receiving apparatus requires a circuit design for the corresponding interface and needs to further include a smart card reader apparatus, etc. Therefore, costs and complexity may be increased. In addition, since the CAS S/W needs to be ported and equipped in the broadcast receiving apparatus, it is difficult to support various CAS functions.

In the authentication device of the PCMCIA card type, all the broadcast signals such as MPEG-TS passing through the demodulator are transmitted to an external conditional access module (CAM) of the PCMCIA type. The TS encrypted in the CAS system is primarily decoded in the CAM and then encrypted with a negotiated key again. Next, the broadcast receiving apparatus decodes the broadcast signals with the negotiated key and then transmits the decoded broadcast signals to a decoder, thereby outputting broadcast images. The CAM of the PCMCIA type uses 11 pins for transmitter (TX) communication /receiver (RX) communication, respectively, and other pins additionally allocated for CPU communication in a circuit form, thereby transmitting the MPEG-TS. In the authentication device of the PCMCIA type, the CAS S/W is not equipped in the broadcast receiving apparatus but is equipped in the CAM and the CAM processes even the EMM, the ECM, and the like.

Even in this case, to support the PCMCIA interface, a circuit for an interface and a PCMCIA adapter need to be added in the broadcast receiving apparatus. Therefore, similar to the smart card, costs and complexity may be increased. In addition, since the MPEG-TS needs to be physically connected to each of the TX/RX in parallel, the MPEG-TS may be difficult to use under the environment that parallel signals such as an IP stream and a file stream are not transmitted.

### SUMMARY

Exemplary embodiments of the present disclosure overcome the above disadvantages and other disadvantages not described above. Also, the present disclosure is not required to overcome the disadvantages described above, and an exemplary embodiment of the present disclosure may not overcome any of the problems described above.

The present disclosure provides a broadcast receiving apparatus and a method for controlling the same capable of operating a conditional access module (CAM) without changing an additional circuit and a CPU by using an USB interface generally adopted in most devices. The present disclosure provides improvement in restrictions occurring at the time of transmitting broadcast signals such as MPEG-TS through an USB interface.

According to an aspect of the present disclosure, a broadcast receiving apparatus includes: a broadcast signal receiver receiving a broadcast signal; a memory storing the received broadcast signal; an interface unit communicating with an external authentication device; and a memory controller controlling the interface unit to transmit the broadcast signal stored in the memory to the authentication device in a chunk having a preset size, when a size of the broadcast signal stored in the memory exceeds the preset size.

The memory controller may control the interface unit to receive the encrypted broadcast signal from the authentication device in the chunk having the preset size when the authentication device encrypts the broadcast signal and transmits the encrypted broadcast signal and store the encrypted broadcast signal received in the chunk having the preset size in the memory. The memory may include a TX buffer storing the broadcast signal received by the broadcast signal receiver; and an RX buffer storing the encrypted broadcast signal received from the authentication device, and the memory controller may read the broadcast signal from a specific address of the TX buffer in the chunk having the preset size and transmit the read broadcast signal to the authentication device and write the encrypted broadcast signal received from the authentication device in the chunk having the preset size in the specific address of the RX buffer.

The broadcast receiving apparatus may further include: a demultiplexer decoding the encrypted broadcast signal; and a main controller controlling a function of the broadcast receiving apparatus, wherein the main controller may output the encrypted broadcast signal stored in the chunk unit having the preset size to the demultiplexer in a basic transmission unit and the basic transmission unit may be a size of a packet at which the broadcast signal is transmitted to the broadcast signal receiver.

The chunk may be a multiple of the basic transmission unit and the main controller may divide the broadcast signal in the chunk unit, which are written in a specific address of the RX buffer, into the basic transmission unit and may sequentially output the divided broadcast signal to the demultiplexer.

When the broadcast signal receiver receives a plurality of broadcast signals, the memory may include TX buffers and RX buffers having the same number as the number of received broadcast signals, the main controller may configure endpoints twice as many as the number of received broadcast signals, and the memory controller may control the interface unit to allocate two endpoints to each broadcast signal so as to transmit and receive the broadcast signals.

The broadcast receiving apparatus may further include: a communication stack transmitting and receiving a message, wherein the main controller may control the communication stack to transmit and receive a protocol message for encryption and decoding of the broadcast signals to and from the authentication device.

The broadcast receiving apparatus may further include: a nonvolatile memory storing data independent of a supply of power, wherein the protocol message may include a certificate, a public key, an electronic signature of the public key of the authentication device and the broadcast receiving apparatus, respectively, and the main controller may create an authentication key and store the created authentication key in the nonvolatile memory when the certificate and the electronic signature of the public key are verified.

The main controller may control the communication stack to create a session key and transmit and receive a sync message of the session key to and from the authentication device, control the communication stack to receive encrypted transport stream key (TS) key, and decode the TS key using the session key and transmit the decoded TS key to a decoder in the demultiplexer, and the decoder in the demultiplexer may use the decoded TS key to decode the encrypted broadcast signals in the authentication device.

The interface unit may be an USB interface and may transmit and receive data to and from the external authentication device by the USB communication scheme.

According to another aspect of the present disclosure, a method for controlling a broadcast receiving apparatus includes: receiving a broadcast signal; storing the received broadcast signal; and transmitting the stored broadcast signal to an external authentication device in a chunk having a preset size when a size of the stored broadcast signal exceeds the preset size.

The method may further include: receiving the encrypted broadcast signal from the authentication device in the chunk having the preset size when the authentication device encrypts the broadcast signal and transmits the encrypted broadcast signal; and storing the encrypted broadcast signal received in the chunk having the preset size.

In the transmitting, the broadcast signal may be read from a specific address of a TX buffer storing the received broadcast signal in the chunk having the preset size and may be transmitted to the authentication device and in the storing of the encrypted broadcast signal, the encrypted broadcast signal received from the authentication device in the chunk having the preset size may be written in a specific address of an RX buffer storing the encrypted broadcast signal received from the authentication device.

The method may further include: outputting the encrypted broadcast signal stored in the chunk unit having the preset size to the demultiplexer in a basic transmission unit; and decoding the encrypted broadcast signal, wherein the basic transmission unit may be a size of a packet at which the broadcast signal in the receiving of the broadcast signal is transmitted to the broadcast receiving apparatus.

The chunk may be a multiple of the basic transmission unit and the broadcast signal in the chunk unit written in a specific address of the RX buffer may be divided into a basic transmission unit and may be sequentially output.

When the broadcast signal receiver receives a plurality of broadcast signals, the memory may include TX buffers and RX buffers having the same number as the number of received broadcast signals and the main controller may configure endpoints twice as many as the number of received broadcast signals and allocate two endpoints to each broadcast signal to transmit and receive the broadcast signal.

The method may further include: transmitting and receiving a protocol message for encryption and decoding of the broadcast signal to and from the authentication device.

The method may further include: creating an authentication key and storing the created authentication key in a nonvolatile memory when the certificate and the electronic signature of the public key are verified, wherein the protocol message may include a certificate, a public key, an electronic signature of the public key of the authentication device and the broadcast receiving apparatus, respectively.

The method may further include: generating a session key; transmitting and receiving a sync message of the session key to and from the authentication device; receiving an encrypted transport stream (TS) key; decoding the TS key using the session key; and decoding the broadcast signal encrypted in the authentication device using the decoded TS key.

The broadcast receiving apparatus may include an USB interface and may transmit and receive data to and from the external authentication device by an USB communication scheme.

According to another aspect of the present disclosure, a broadcast receiving apparatus may include a broadcast signal receiver to receive a broadcast signal, a memory to store the received broadcast signal, a USB interface configured to communicate with an external authentication device implemented as a USB conditional access module, a memory controller configured to control the USB interface unit to transmit the broadcast signal stored in the memory to the USB conditional access module to reduce a processing load within the broadcast receiving apparatus.

According to another aspect of the present disclosure, a broadcast receiving system may include a USB conditional access module to perform authentication and a broadcast receiving apparatus. The a broadcast receiving apparatus may include a signal receiver to receive a broadcast signal, a memory to store the received broadcast signal, a USB interface to connect and communicate with the USB conditional access module, and a memory controller configured to control the USB interface to transmit the broadcast signal stored in the memory to the USB conditional access module.

According to another aspect of the present disclosure, a broadcast receiving apparatus may include a USB interface configured to communicate with an external authentication device implemented as a USB conditional access module, and a memory controller configured to control the USB interface unit to transmit a stored broadcast signal to the external authentication device and to use any one or more of a direct memory access and TX/RX buffering to reduce a processor load.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a schematic block diagram illustrating a configuration of a broadcast receiving apparatus according to an exemplary embodiment of the present disclosure;
FIG. 2 is a block diagram illustrating in detail the configuration of the broadcast receiving apparatus according to an exemplary embodiment of the present disclosure;
FIG. 3 is a diagram illustrating a configuration of a broadcast receiving apparatus when receiving a plurality of broadcast signals according to another exemplary embodiment of the present disclosure;
FIGS. 4 and 5 are sequence diagrams for describing mutual authentication and key exchange between the broadcast receiving apparatus according to an exemplary embodiment of the present disclosure and an authentication device;
FIG. 6 is a sequence diagram for describing a session key update of the broadcast receiving apparatus according to an exemplary embodiment of the present disclosure;
FIG. 7 is a diagram for describing an encryption of a TS key of the broadcast receiving apparatus according to an exemplary embodiment of the present disclosure;
FIGS. 8 to 10 are flow charts for describing a method for controlling a broadcast receiving apparatus according to various exemplary embodiments of the present disclosure; and
FIG. 11 is a sequence diagram for describing a method for controlling a broadcast receiving apparatus according to an exemplary embodiment of the present disclosure.

### DETAILED DESCRIPTION

Hereinafter, exemplary embodiments of the present disclosure will be described in detail with reference to the accompanying drawings. Further, when it is decided that a detailed description for the known function or configuration related to the present disclosure may unnecessarily obscure the gist of the present disclosure, the detailed description therefor will be omitted. Further, the following terminologies are defined in consideration of the functions in the present disclosure and may be construed in different ways by the intention of users and operators. Therefore, the definitions thereof should be construed based on the contents throughout the specification.

The terms "first", "second", etc. may be used to describe diverse components, but the components are not limited by the terms. The terms are only used to distinguish one component from the others.

The terms used in the present application are only used to describe the exemplary embodiments, but are not intended to limit the scope of the disclosure. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

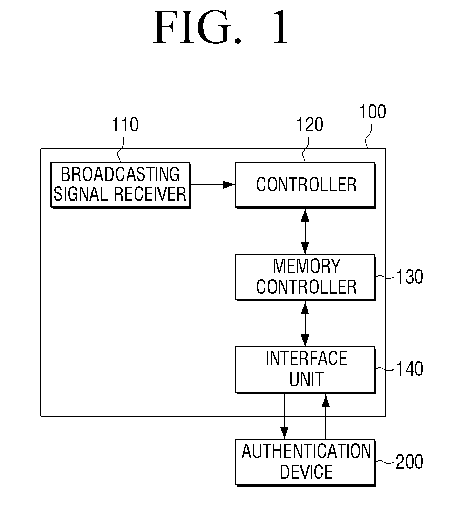

FIG. 1 is a schematic block diagram for describing a configuration of a broadcast receiving apparatus 100 according to an exemplary embodiment of the present disclosure. Referring to FIG. 1, the broadcast receiving apparatus 100 includes a broadcast signal receiver 110, a memory 120, a memory controller 130, and an interface unit 140. Further, the broadcast receiving apparatus 100 transmits and receives data, etc., to and from an external authentication device 200. The broadcast receiving apparatus 100 according to the exemplary embodiment of the present disclosure may be implemented in various forms such as digital TV, a set top box (STB), and a video gateway.

The broadcast signal receiver 110 receives broadcast signals from external satellites, a cable, a terrestrial wave, the Internet, a network, and the like. The broadcast signals received by the broadcast signal receiver 110 are generally scrambled in the case of pay TV. For example, the broadcast receiving signal may be MPEG-TS. In the MPEG-TS, data are transmitted in a unit of 188 bytes. Hereinafter, a size of packet in which the broadcast signals scrambled in a unit of 188 bytes are transmitted to the broadcast receiving apparatus 100 is defined as a basic transmission unit.

The memory 120 stores the broadcast signals. The memory 120 may be divided into a portion where the broadcast signals to be transmitted to the authentication device 200 are stored and a portion where the broadcast signals received from the authentication device 200 is stored. Further, the memory 120 may include a non-volatile random access memory (NVRAM) for storing information such as an authentication key.

The memory controller 130 may read the broadcast signals from a specific address of the memory 120 and write the broadcast signals in a specific address. The memory controller 130 directly accesses the memory by a direct memory access (DMA) scheme to read or write the broadcast signals from or in the memory. When the DMA scheme is supported, a CPU, etc., serving as the main controller 150 need not participate in data transmission, and therefore a load applied to the CPU may be reduced.

According to the exemplary embodiment of the present disclosure, the memory controller 130 reads the broadcast signals stored in the memory 120 in a chunk having a preset size when a size of the broadcast signals stored in the memory 120 exceeds a preset size. Further, the broadcast signals read in a chunk unit are transmitted to the authentication device 200. The reason of transmitting and receiving the broadcast signals in the chunk unit is to avoid frequent transmission so as to reduce the load applied to the CPU. For example, the chunk may be a multiple of a basic transmission unit.

According to another exemplary embodiment of the present disclosure, when the authentication device 200 transmits the broadcast signals descrambled and encrypted, the memory controller 130 writes the broadcast signals received in the chunk having the preset size in the memory 120.

The interface unit 140 transmits and receives data, etc., to and from the external authentication device 200. For example, the interface unit 140 is a universal serial bus (USB) interface and transmits and receives data to and from the authentication device 200 by the USB communication scheme.

The above-mentioned broadcast receiving apparatus 100 may use the USB interface to reduce the load applied to the CPU while transmitting the broadcast signals.

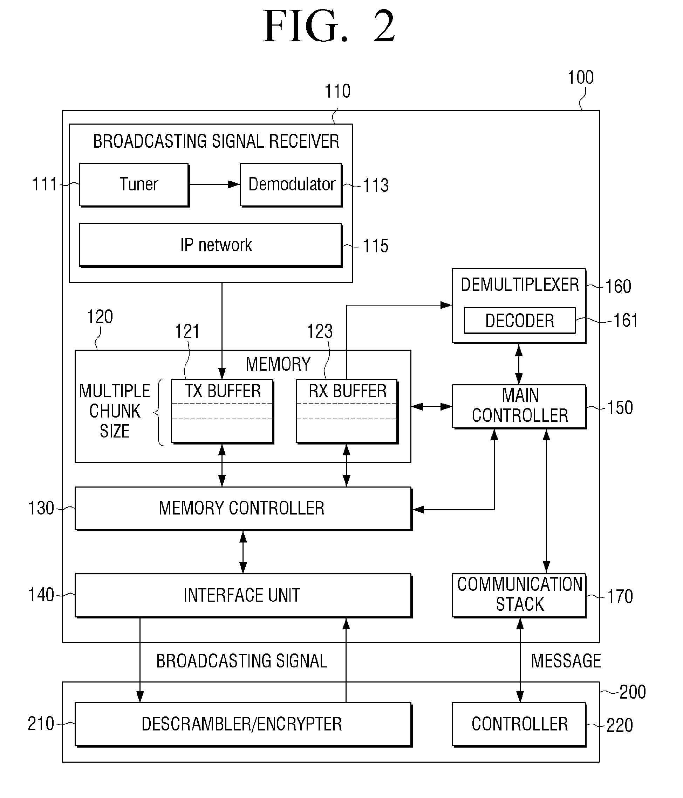

FIG. 2 is a block diagram illustrating in detail the configuration of the broadcast receiving apparatus 100 according to the exemplary embodiment of the present disclosure. Referring to FIG. 2, the broadcast receiving apparatus 100 includes the broadcast signal receiver 110, the memory 120, the memory controller 130, the interface unit 140, the main controller 150, a demultiplexer 160 and a communication stack 170.

The broadcast receiving apparatus 100 according to the exemplary embodiment of the present disclosure is to improve restrictions when using the USB interface. For example, the broadcast receiving apparatus 100 may efficiently transmit and receive the broadcast signals while reducing the load applied to the CPU. Further, the broadcast receiving apparatus 100 serves to prevent the broadcast signals transmitted through the USB from being copied. Hereinafter, a method for efficiently transmitting and receiving broadcast signals is first described and then the broadcast signal copying prevention function will be described.

The broadcast signal receiver 110 receives the broadcast signals from the outside. In particular, in the case of pay TV, the broadcast signal receiver 110 receives the scrambled broadcast signals from the CAS system. For example, the broadcast signal receiver 110 may include a tuner 111 and a demodulator 113. As another example, the broadcast signal receiver 110 may include an IP network 115. In the case of receiving the broadcast signals through the IP network 115, since a separate demodulation process is not required, the broadcast signal receiver 110 may not include the demodulator 113.

The memory 120 stores the received broadcast signals. The memory 120 may be provided with a specific zone for direct memory access (DMA). For example, the memory 120 may include a TX buffer 121 and an RX buffer 123. The TX buffer 121 stores the scrambled broadcast signals received by the broadcast signal receiver 110. The TX buffer 121 sequentially stores the broadcast signals by 188 bytes, which are a basic transmission unit, according to an order in which the broadcast signals are received by the broadcast signal receiver 110. The RX buffer 123 stores the encrypted broadcast signals received from the authentication device 200. The RX buffer 123 stores the encrypted broadcast signals in a chunk unit. The chunk unit needs to be a multiple of 188 bytes which are the basic transmission unit.

A size of the TX buffer 121 and the RX buffer 123 may be allocated at a level at which continuity of a transport stream (TS) may be secured, even when a maximum load is applied to the main controller 150. In addition, the chunk unit determines a proper size in consideration of USB transmission characteristics and a channel switching speed. For this reason, a user does not feel a channel switching delay due to the chunk size.

Further, the memory 120 may include a nonvolatile memory (not illustrated). For example, the memory 120 may store the authentication key, ID, etc., in the nonvolatile memory. The broadcast receiving apparatus 100 may perform the authentication only through a simple authentication procedure by using the authentication key, etc., stored in the nonvolatile memory, when again performing mutual authentication with the authentication device 200. The memory controller 130 directly accesses the memory 120 to read and write data from a specific frequency of the memory 120. The memory controller 130 may support the DMA function to reduce the load applied to the CPU. According to the exemplary embodiment of the present disclosure, the memory controller 130 reads the broadcast signals from the specific address of the Tx buffer 121 in the chunk unit and transmits the read broadcast signals to the interface unit 140. Further, the memory controller 130 writes the broadcast signals in the specific address of the RX buffer in the chunk unit.

The interface unit 140 transmits and receives data to and from the authentication device 200. According to the exemplary embodiment of the present disclosure, when receiving a plurality of broadcast signals, the interface unit 140 may configure twice as many endpoints as the number of broadcast signals to allocate two endpoints to each of the broadcast signals. The interface unit 140 is used to transmit the broadcast signals to the authentication device 200 through one endpoint and is used to receive the broadcast signals from the authentication device 200 through the other endpoint.

The main controller 150 controls a general function of the broadcast receiving apparatus 100. For example, the main controller 150 may be the CPU of the broadcast receiving apparatus 100. According to the exemplary embodiment of the present disclosure, the main controller 150 may control the memory 120 and the main controller 130. The main controller 150 may also perform a direct control function and may modularize each function and provide the module. For example, the main controller 150 may include a TS accumulator module, a TS sender module, a TS receiver module, and a TS feeder module.

According to the exemplary embodiment of the present disclosure, the TS accumulator module controls the memory 120 to store the broadcast signals sequentially received by the TX buffer 121 pre-allocated to the memory 120. Further, if a size of the broadcast signals stored in the TX buffer 121 exceeds a preset size, the TS accumulator module informs the TS sender module of it. The TS sender module may command the memory controller 130 to read the broadcast signals from the specific address of the TX buffer 121 in the chunk unit and transmit the read broadcast signals. When the chunk stored in the TX buffer 121 is successfully transmitted, the main controller 150 allocates the corresponding address portion of the TX buffer 121 as an empty space to receive and store new broadcast signals again.

According to another exemplary embodiment of the present disclosure, if the memory controller 130 writes the broadcast signals in the specific address of the RX buffer in the chunk unit, the main controller 150 divides the encrypted broadcast signals stored in the chunk unit into the basic transmission unit and outputs the broadcast signals to the demultiplexer 160. The above-mentioned function may be fed from the TS feeder module. Next, the main controller 150 may allocate the corresponding address portion of the RX buffer 123 as an empty space to receive and store new broadcast signals again.

The broadcast receiving apparatus 100 as described above may use the DMA function, the USB control, and the TX/RX buffering connection technology to overcome the CPU load problem with the USB interface. Further, the broadcast receiving apparatus 100 uses the USB interface and therefore may use the authentication device 200 implemented as an USBCAM independent of a broadcast signal (MPEG-TS) input scheme of the broadcast receiving apparatus 100 (for example, satellite, terrestrial wave, cable, and IP network).

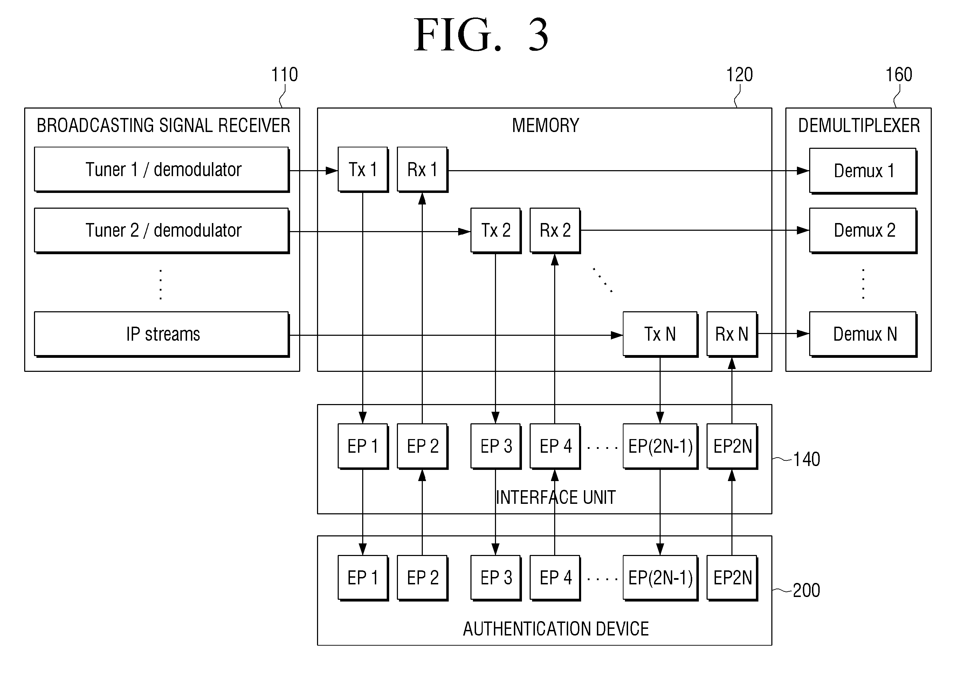

FIG. 3 is a diagram for describing an operation of the broadcast receiving apparatus 100 in the case of receiving a plurality of broadcast signals according to another exemplary embodiment of the present disclosure. For example, the broadcast signal receiver 110 may receive the plurality of broadcast signals from a plurality of tuners and an IP stream. When the plurality of broadcast signals is transmitted to the authentication device 200, there is a need to distinguish the plurality of broadcast signals. When the tuners are distinguished by separately reprocessing the broadcast signals, an additional load may be applied to the main controller 150. As an example of the reprocessing, there may be a method for distinguishing a plurality of broadcast signals by attaching header information to the broadcast signals for each tuner. The broadcast receiving apparatus 100 according to the exemplary embodiment of the present disclosure uses the USB interface and therefore configures USB endpoints to distinguish the plurality of broadcast signals without separately reprocessing the broadcast signals.

The USB endpoints are ends of a communication flow and each have a unique ID and are present in the USB device. In the USB system, each end point is allocated with an independent address. The broadcast receiving apparatus 100 may configure the plurality of endpoints to distinguish each broadcast signal while transmitting the broadcast signals without reprocessing.

Further, under the precondition that a bandwidth of the USB communication is secured, the broadcast receiving apparatus 100 according to the exemplary embodiment of the present disclosure may also support a personal video recording (PVR) function and a picture in picture (PIP) function through the single authentication device 200.

According to the exemplary embodiment of the present disclosure, the main controller 150 may control the communication stack 170 to transmit and receive a protocol message for encryption and decoding of the broadcast signals to and from the authentication device 200. The protocol message includes a certificate, a public key, and an electronic signature of the public keys for the broadcast receiving apparatus 100 and the authentication device 200, respectively. For example, the certificate of authentication may be a device certificate or a manufacture certificate. Further, according to the exemplary embodiment of the present disclosure, a Diffie-Hellman scheme may be used for a key exchange, etc.

The main controller 150 verifies the certificate, the public key, and the electronic signature. When validation is verified, the main controller 150 creates an authentication key and stores the created authentication key in the nonvolatile memory.

The main controller 150 creates a session key. Further, the main controller 150 controls the communication stack 170 to transmit and receive a message for synchronization of the session key. Further, the main controller 150 controls the communication stack 170 to receive an encrypted transport stream (TS) key.

A decoder 161 in the demultiplexer (Demux) 160 decodes the encrypted broadcast signals in the authentication device 200. The main controller 150 uses the session key to decode the TS key received from the authentication device 200. Further, the main controller 150 equips the decoder 161 in the demultiplexer 160 with the decoded TS key. The decoder 161 in the demultiplexer uses the equipped TS key to decode the encrypted broadcast signals and output the decoded broadcast signals to the decoder (not illustrated).

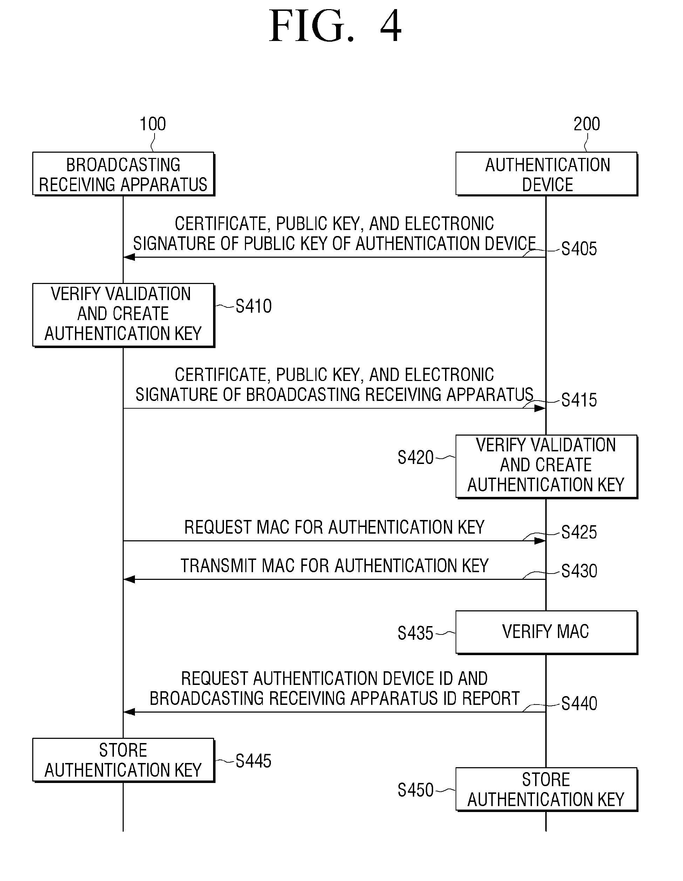

Hereinafter, a method for encrypting and transmitting broadcast signals will be described in detail with reference to FIGS. 4 to 7.

FIG. 4 is a diagram for describing a method for mutual authentication between the broadcast receiving apparatus 100 according to the exemplary embodiment of the present disclosure and the authentication device 200. First, the authentication device 200 transmits the certificate, the public key, and the electronic signature of the public key of the authentication device 200 to the broadcast receiving apparatus 100 (S405). The main controller 150 receiving the certificate and the electronic signature of the public key verifies the validation of the certificate and the electronic signature of the public key. Further, the main controller 150 uses the received public key to create a shared key. The main controller 150 uses the created shared key and an ID of the certificate to create the authentication key (S410). When the certificate and the electronic signature of the public key are valid, the main controller 150 controls the communication stack 170 to transmit the certificate, the public key, and the electronic signature of the public key of the broadcast receiving apparatus 100 to the authentication device 200 (S415). The authentication device 200 verifies the validation of the certificate by going through the same process as the broadcast receiving apparatus 100 to create the authentication key (S420).

Next, the authentication device 200 requests a message authentication code (MAC) for the authentication key (S425). In response, the main controller 150 controls the communication stack 170 to transmit the MAC for the authentication key (S430). The authentication device 200 verifies the received MAC (S435). When the MAC is verified, the authentication device 200 request the ID of the authentication device 200 and the ID of the broadcast receiving apparatus 100 to be reported to a pay TV system (S440). If the reported ID corresponds to a user registered in the pay TV system, the broadcast system transmits a validation message. Further, for abbreviated authentication in both of the broadcast receiving apparatus 100 and the authentication device 200, the authentication key, the shared key, the ID, etc., are stored in the nonvolatile memory (S445 to S450).

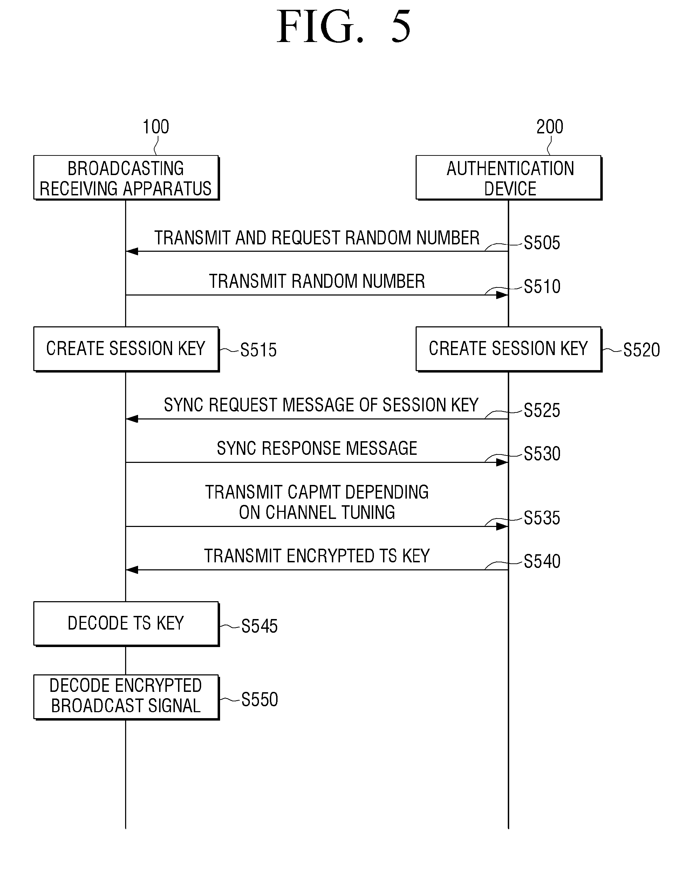

When the validation message is received from the broadcast system, the authentication device 200 enters a step of creating the session key. The creation of the session key will be described with reference to FIG. 5. For the creation of the session key, the authentication device 200 transmits a random number to the broadcast receiving apparatus 100 and requests an offer of the random number to the broadcast receiving apparatus 100. In response, the main controller 150 controls the communication stack 170 to create a random number and transmit the created random number to the authentication device 200 (S510). The broadcast receiving apparatus 100 and the authentication device 200 each create the session key based on the received random number (S515-S520).

The authentication device 200 transmits a sync request message for synchronization of the created session key (S525). The main controller 150 receiving the message controls the communication stack 170 to transmit a sync response message (S530). Next, the broadcast receiving apparatus 100 and the authentication device 200 use the session key created to encrypt/decode a secure message.

When the user tunes a pay channel, the broadcast receiving apparatus 100 transmits CAPMT to the authentication device 200 based on a DVB/CI specification (S535). The authentication device 200 receiving the CAPMT transmits the TS key and copy right information used to encrypt the corresponding channel in a secure message format (S540). In this case, the TS key is encrypted using the created session key. Further, the authentication device 200 attaches the MAC code to prevent a forgery of the copy right information.

The main controller 150 receiving the secure message uses the created session key to decode the TS key (S545). Further, the main controller 150 checks the MAC code to set the decoded TS key in the decoder 161 in the demultiplexer 160 and apply the copy right information if it is checked that there is no abnormality in the MAC code. The main controller 150 controls the decoder 161 in the demultiplexer 160 to decode the encrypted broadcast signals using the decoded TS key (S550).

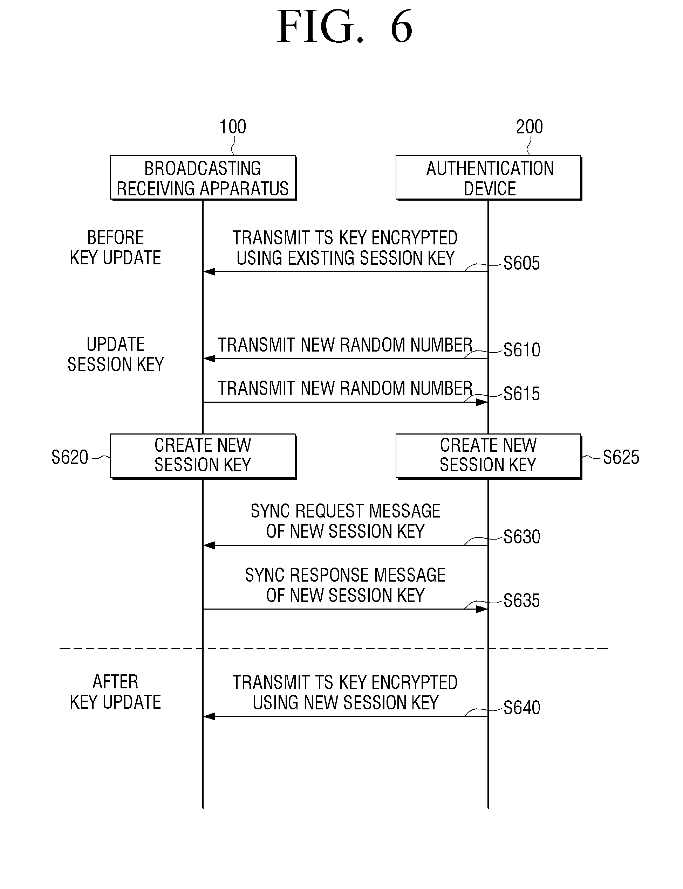

In the case of using the same session key for a long period of time, it may be vulnerable to security. Therefore, the broadcast receiving apparatus 100 according to the exemplary embodiment of the present disclosure updates the session key at each preset period. A method for updating a session key will be described with reference to FIG. 6.

Before the key update period is arrived, the authentication device 200 transmits the TS key encrypted using the existing session key to the broadcast receiving apparatus 100 (S605). When the key update period is arrived, the authentication device 200 creates a new random number and transmits the created random number to the broadcast receiving apparatus 100 (S610). The broadcast receiving apparatus 100 receiving the random number creates a new random number and transmits the created random number to the authentication device 200 (S615) as well. Steps S620 to S635 correspond to steps S515 to S530 in FIG. 5 and therefore a description thereof will be omitted. From the time when the synchronization is finished, the broadcast receiving apparatus 100 and the authentication device 200 use a newly updated session key to encrypt / decrypt the secure message (S640).

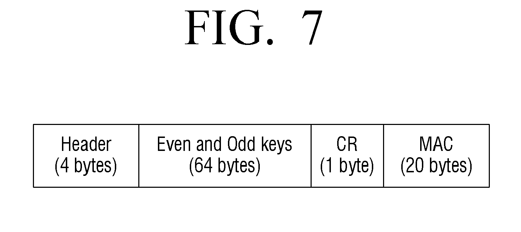

FIG. 7 is a diagram for describing the secure message format. According to the exemplary embodiment of the present disclosure, the broadcast receiving apparatus 100 receives the TS key, etc., encrypted by the secure message format.

The secure message has a header of 4 bytes and a key payload of 64 bytes. Further, the secure message is attached with the MAC code to prevent a forgery of the transmitted message. Further, the secure message may be added with 1 byte information representing the copy right information. The following Table 1 represent s a configuration of the secure message.

**[Table 1]**

| Syntax | Bytes | Description |
|---|---|---|
| SCI_secure_msg { | | |
| SCI_secure_msg_ag | 3 | 0x9F9407 |
| length_filed() | 1 | 0x00 |
| secure_message_header | 4 | defined in Table 2. |
| even_ts_key | 32 | encrypted/clear even key |
| odd_ts_key | 32 | encrypted/clear odd key |
| copy_right | 1 | copy right information |
| message_mac | 20 | MAC from secure_message_header to copy_right |
| } | | |

A description of each item of the above Table 1 is as follows.
sercure_message_header - 4bytes header to indicate what should be applied to decrypt chosen program and to keep 'copy right' policy.
even_ts_key - even key field, effective length depends on algorithm of secure_messag_header. The msb will be used for each algorithm and the rest will be filled by zero padding. This filed is encrypted by session key(SsKey) if flag filed of secure_message_heaer is '1'.
odd_ts_key - odd key field, effective length depends on algorithm of secure_messag_header.

The msb will be used for each algorithm and the rest will be filled by zero padding. This field is encrypted by session key(SsKey) if flag field of secure_message_heaer is '1'.
copy_right - copy right information
0: copy free
1: copy no more
2: copy once
3: copy never,
message_mac - massage authentication code which is calculated from Mac Key.
calculated from Mac Key.

**[Table 2]**

| Syntax | Bytes | Description |
|---|---|---|
| Secure_message_header { | | |
| flag | 1 | flag of encryption status of even/odd key |
| even | 1 | apply even key |
| odd | 1 | apply odd key |
| ce | 1 | apply 'copy right' |
| connection_id | 4 | connected tuner ID |
| algorithm | 4 | encryption algorithm for transport stream |
| mode | 4 | cipher block mod for TS encryption |
| change_count | 16 | cyclic counter for session key update |
| } | | |

The above Table 2 shows a configuration of a secure message header. A description of each item is as follows.
flag - oven/odd key encryption flag. '0'is no encryption '1' is encryption at even_ts_key / odd_ts_key filed.
even - apply even key which is loaded at even_ts_key.
odd - apply odd key which is loaded at odd_ts_key.
ce - apply copy right policy which is loaded at copy_right.
algorithm - Block cipher algorithm and key size whose are used for encryption TS
1: DES-56bit
2: TDES-112bit
3: TDES-168bit
4: AES-128bit
5: AES-192bit
6: SEED-128bit
7: CSA-64bit
mode - Block cipher mode
1: ECB
2: CBC
3: CTR
change_count - cyclic counter(0x0000-0xFFFF) to synchronize the session key after key refresh. This counter is increased by USBCAM after the sync_req /_sync_cnf transaction is completed and USBCAM applied new session key to even/odd key field. The default key refresh time is 60 seconds. CA vender or USBCAM vender must set key refresh time properly.
(The term called the USBCAM used in this portion may be understood as corresponding to the authentication device 200 according to the exemplary embodiment of the present disclosure)

The broadcast receiving apparatus 100 according to the exemplary embodiment of the present disclosure uses the public key and the ID to calculate the shared key, the authentication key, etc. For example, the main controller 150 calculates the shared key, etc., by the Diffie-Hellman (DH) scheme. Each key calculation method is as follows. For convenience, in the following Calculation Equation, the broadcast receiving apparatus 100 is represented by HOST and the authentication device 200 is represented by the USBCAM.
a. DH shared key calculation
   USBCAM's DHKey = (HOST_DHKey)x mod n, where HOST_DHKey = gy mod n
   HOST's DHKey = (USBCAM_DHKey)y mod n, where USBCAM_DHKey = gx mod n where 'mod' is modulus reduction.
   As in the above Equation, the broadcast receiving apparatus 100 and the authentication device 200 may transmit and receive the public key to and from each other to calculate the same DH shared key, respectively.
b. Authentication key calculation
   AuthKey20B = MAC[DHKey256B|USBCAM_ID8B|HOST_ID8B]20B
   where 'B' is bytes, MAC is message digest.
   As described above, the broadcast receiving apparatus 100 and the authentication device 200 uses the shared key and the ID of the certificate to create the authentication key.
c. Authentication key MAC calculation
   SCI_AuthKeyMac20B = MAC[AuthKey20B|CA_credential_mac32B]20B
   where 'B' is bytes, MAC is message digest.
   The broadcast receiving apparatus 100 calculates the authentication key MAC as described above and transmits the calculated authentication key to the authentication device 200.
d. Session key calculation
   SsKey128b =
   MAC[AuthKey20B|HKey256B|USBCAM_Rand8B|Host_Rand8B|CA_credential_enc32B]msb 128b
   where 'B' is bytes and 'b' is bits. 'msb' is the most significant bit, MAC is message digest.

The session key (SSkey) is used to encrypt TS even/odd key field(64-btyes) by block cipher algorithm. 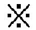 CA_credential_enc can be provided from root certificate authority or CA vendor.

The broadcast receiving apparatus 100 and the authentication device use the random number transmitted and received to and from each other to calculate the session key.
e. message MAC calculation
MacKey128b =
MAC[AuthKey20B|DHKey256B|USBCAM_Rand8B|Host_Rand8B|CA_credential_mac32B]msb 128b
target_message69B = [secure_message_header|even_ts_key|odd_ts_key|copy_right] message_mac20B = MAC[target_message69B|MacKey128b]20B
where, 'B' is bytes and 'b' is bits, and 'msb' is the most significant bit, MAC is message digest. 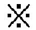 CA_credential_mac can be provided from root certificate authority or CA vendor.

As described above, the broadcast receiving apparatus 100 according to another exemplary embodiment of the present disclosure may apply the copy right information of contents corresponding to the broadcast signals while preventing hacking and copying of the broadcast signals transmitted from the authentication device 200.

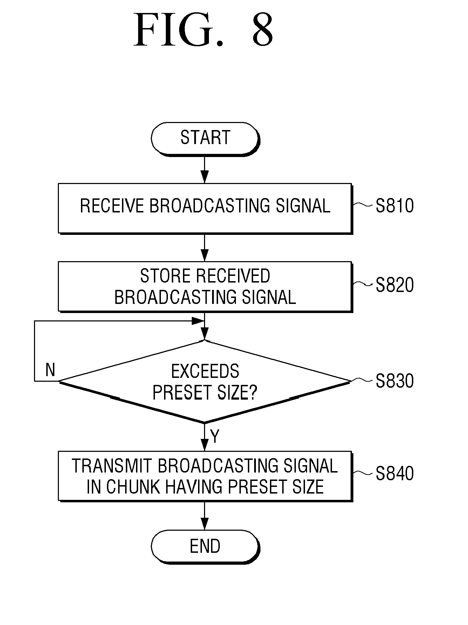

Hereinafter, a method for controlling the broadcast receiving apparatus 100 according to various exemplary embodiments of the present disclosure will be described with reference to FIGS. 8 to 11.

FIG. 8 is a flow chart for describing a method for controlling the broadcast receiving apparatus 100 according to the exemplary embodiment of the present disclosure. The broadcast receiving apparatus 100 first receives the scrambled broadcast signals (S810). The pay TV system applies the CAS not to view the broadcast images without authentication to scramble the broadcast signals. Next, the broadcast receiving apparatus 100 stores the received broadcast signal (S820). For example, the broadcast receiving apparatus 100 may store the received broadcast signals in the specific address of the pre-allocated TX buffer for the direction memory access (DMA). The broadcast receiving apparatus 100 determines whether the stored broadcast signals exceed the preset size (S830). The preset size may be a multiple of the basic transmission unit. For example, in the case of the MPEG-TS, 188 bytes are the basic transmission unit. If the size of the stored broadcast signal exceeds the preset size (S830-Y), the broadcast receiving apparatus 100 transmits the stored broadcast signals to the external authentication device 200 in the chunk having the preset size (S840). For example, the broadcast receiving apparatus 100 may read the broadcast signals from the specific address of the TX buffer by the DAM scheme and transmit the read broadcast signals to the authentication device 200. By using the DMA scheme, the CPU need not to be used to directly transmit or receive the broadcast signals. Further, the transmission frequency of the broadcast signals may be reduced by transmitting the broadcast signals in the chunk unit which is a bundle of data having a preset size. Therefore, resources of the CPU and the system in the broadcast receiving apparatus 100 according to the exemplary embodiment of the present disclosure may be efficiently managed.

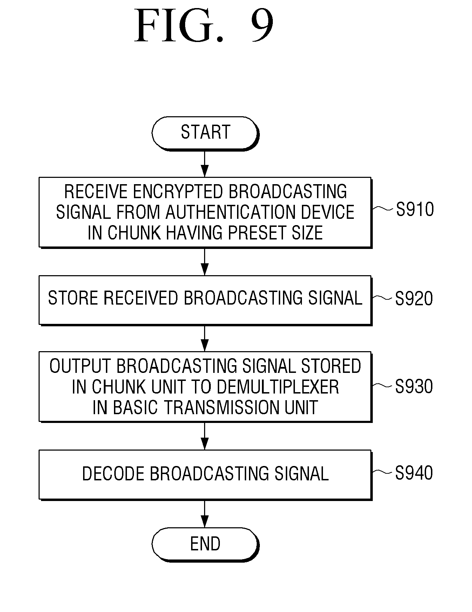

FIG. 9 is a flow chart for describing the method for controlling the broadcast receiving apparatus 100 according to another exemplary embodiment of the present disclosure. The broadcast receiving apparatus 100 receives the encrypted broadcast signals from the authentication device 200 in the chunk having a preset size (S910). In the transmitting step described in FIG. 8, similar to the effect of transmitting the broadcast signals in the chunk unit, to reduce the reception frequency, the broadcast receiving apparatus 100 receives the encrypted broadcast signals in the chunk having the preset size. Next, the broadcast receiving apparatus 100 stores the received encrypted broadcast signal (S920). For example, the broadcast receiving apparatus 100 may store the received broadcast signals in the specific address of the pre-allocated RX buffer for the direction memory access (DMA). The broadcast receiving apparatus 100 writes the broadcast signals received by the authentication device 200 in the specific address of the RX buffer by the DMA scheme.

Next, the broadcast receiving apparatus 100 outputs the broadcast signals stored in the chunk unit to the demultiplexer in the basic transmission unit (S930). The basic transmission unit is a size of a packet in which the scrambled broadcast signals are transmitted to the broadcast receiving apparatus 100. For example, in the case of the MPEG-TS, 188 bytes are the basic transmission unit. The chunk is a multiple of the basic transmission unit. The broadcast receiving apparatus 100 divides the broadcast signals in the chunk unit, which are written in the specific address of the RX buffer, into the basic transmission unit and sequentially outputs the divided broadcast signals. Next, the broadcast receiving apparatus 100 decodes the encrypted broadcast signals divided into the basic transmission unit (S940).

According to the exemplary embodiment of the present disclosure, when the broadcast signal receiver receives the plurality of scrambled broadcast signals, the broadcast receiving apparatus 100 may include the same number of TX buffers and RX buffers as the number of received broadcast signals. Further, the broadcast receiving apparatus 100 may configure the USB endpoints twice as many as the number of received broadcast signals and allocate two USB endpoints to each broadcast signal to transmit and receive the broadcast signals. By doing so, the broadcast receiving apparatus 100 may distinguish multiplex broadcast signals without reprocessing the broadcast signals and transmit and receive the multiplex broadcast signals to and from the authentication device 200.

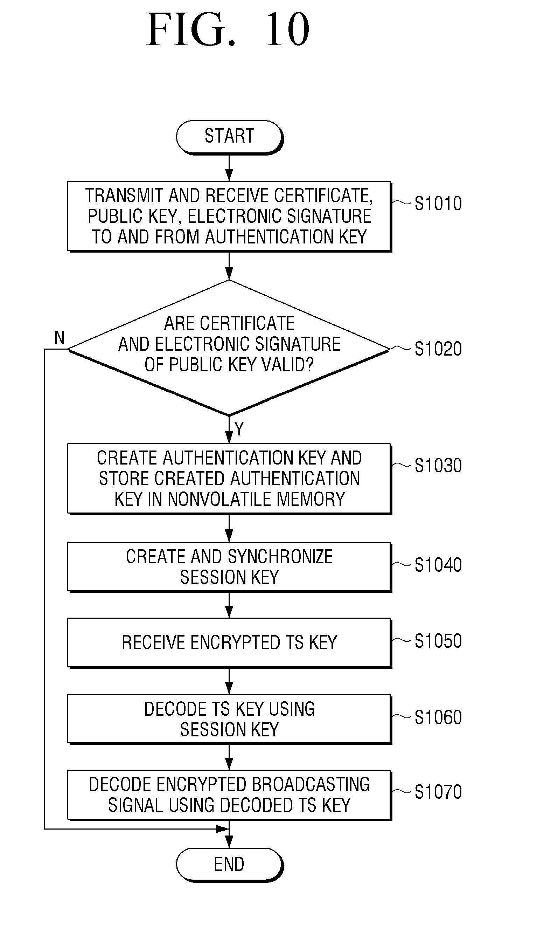

FIG. 10 is a flow chart for describing a method for controlling the broadcast receiving apparatus 100 according to the exemplary embodiment of the present disclosure. The broadcast receiving apparatus 100 may transmit and receive a protocol message for encryption and decoding of the broadcast signals to and from the authentication device 200. The broadcast receiving apparatus 100 first transmits and receives the certificate, the public key, and the electronic signature of the public key to and from the authentication device (S1010). The broadcast receiving apparatus 100 verifies whether the certificate and the electronic signature of the public key received by the authentication device is valid (S1020). If the validation of the certificate and the electronic signature of the public key is verified (S1020-Y), the authentication key is created and stored in the nonvolatile memory (S1030). For example, the authentication key may be created using the public key and the ID of the certificate. By storing the authentication key in the nonvolatile memory, when the authentication procedure proceeds to the same authentication device 200 again, the broadcast receiving apparatus 100 may abbreviate the authentication procedure.

The authenticated broadcast receiving apparatus 100 creates and synchronizes the session key (S1040). Further, the broadcast receiving apparatus 100 receives the TS key encrypted by the authentication device 100 using the session key. The broadcast receiving apparatus 100 decodes the TS key using its own session key (which is the same as the session key of the authentication device) (S1060). Further, the broadcast receiving apparatus 100 decodes the broadcast signals encrypted and transmitted by the authentication device 200 using the decoded TS key (S1070). The decoded broadcast signals are transmitted to the decoder and are output as the broadcast images. By applying the secure protocol described above, the broadcast receiving apparatus 100 may safely protect the broadcast signals transmitted from the authentication device 20 from external hacking or copying.

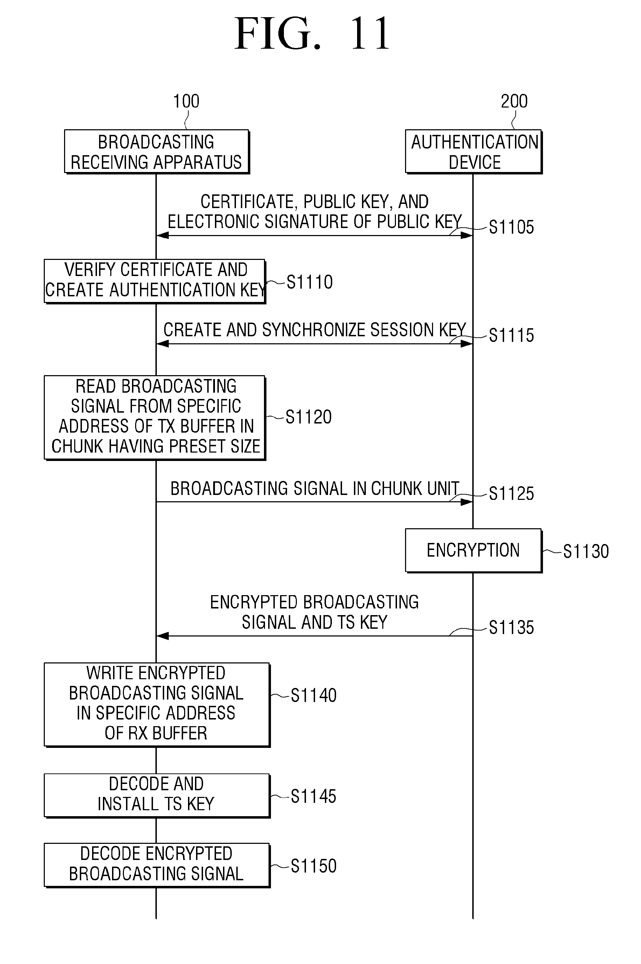

FIG. 11 is a flow chart for describing the method for controlling the broadcast receiving apparatus 100 according to the exemplary embodiment of the present disclosure.

First, the broadcast receiving apparatus 100 and the authentication device 200 are mutually authenticated to each other and exchange the key with each other. This is to protect the broadcast signals transmitted from the authentication device 200 to the broadcast receiving apparatus from the external hacking or copying. The broadcast receiving apparatus 100 and the authentication device 200 transmit the certificate, the public key, and the electronic signature of the public key to each other (S1105). The broadcast receiving apparatus 100 verifies whether the certificate and the electronic signature of the public key received by the authentication device is valid. If validated, the broadcast receiving apparatus 100 creates the authentication key (S1110). Although not illustrated, the authentication device 200 also verifies the validation of the certificate and the electronic signature of the broadcast receiving apparatus 100 and creates the authentication key.

When the authentication procedure is finished, a process of creating the session key used to encrypt/decode the broadcast signals and the TS key is performed. The broadcast receiving apparatus 100 and the authentication device 200 create a random number for each other and transmit the created random number. The broadcast receiving apparatus 100 and the authentication device 200 use the received random number to create the session key and transmit and receive the sync message with each other to synchronize the session key (S1115).

The broadcast receiving apparatus 100 receives the scrambled broadcast signals from the outside such as the pay TV system. Further, the broadcast receiving apparatus 100 stores the received broadcast signals in the specific address of the TX buffer. The broadcast receiving apparatus 100 reads the broadcast signal from the specific address of the TX buffer in the chunk having the preset size by the DMA scheme (S1120). Further, the broadcast receiving apparatus 100 transmits the read broadcast signals in the chunk unit to the authentication device 200 (S1125).

The authentication device 200 descrambles the scrambled broadcast signals received. Further, the authentication device 200 encrypts th descrambled broadcast signals using the TS key (S1130). Next, the authentication device 200 transmits the broadcast signal encrypted using the TS key and the encrypted TS key encrypted using the session key to the broadcast receiving apparatus 100 (S1135).

The broadcast receiving apparatus 100 writes the encrypted broadcast signals received in the chunk unit in the specific address of the RX buffer by the DMA scheme (S1140). Further, the broadcast receiving apparatus 100 decodes the received TS key using the session key. The decoded TS key is equipped in the decoder in the demultiplexer of the broadcast receiving apparatus 100 to be used to decode the broadcast signals (S1145). The broadcast receiving apparatus 100 divides the broadcast signals written in the chunk unit into the basic transmission unit and outputs the divided broadcast signals to the demultiplexer. The decoder in the demultiplexer decodes the broadcast signals encrypted using the equipped TS key (S1150).

By the method for controlling the broadcast receiving apparatus 100 according to various exemplary embodiments of the present disclosure as described above, the separable secure module function may be operated by only a common USB port. Further, the CPU overload problem of the USB interface and the security problem of the transmitted broadcast signals may be solved.

Further, a program code for executing the control method according to various exemplary embodiments of the present disclosure as described above may be stored in various types of recording media. In detail, the program codes may be stored in various types of recording media that is readable by a terminal, such as a random access memory (RAM), a flash memory, a read only memory (ROM), an erasable programmable ROM (EPROM), an electronically erasable programmable ROM (EEPROM), a register, a hard disk, a removable disk, a memory card, a universal serial bus (USB) memory, a compact-disk (CD) ROM, and the like.

Meanwhile, as a method for checking whether the present disclosure is applied as described above, there may be method as follows.

First, a method for checking whether MPEG TS header sync (0 x 47) bytes are transmitted to the RX/TX in a constant chunk size (bulk transfer mode) while an USB analyzer monitoring an MPEG TS header sync (0 x 47) bytes may be used.

Second, a method for checking whether to divide the MPEG TS header sync (0 x 47) bytes into at least one end point and transmit it while USB analyzer monitoring the MPEG TS header sync (0 x 47) bytes may be used.

Third, a method for transmitting an APDU tag defined or used as the USB analyzer by applicant (Samsung Electronics) and checking whether TS encryption using the APDU tag in an RX section is generated may be used.

Fourth, a method for checking whether a communication message is present with a DMA controller for transmitting MPEG in a constant chunk size upon transmitting the MPEG to the USB may be used.

It may be confirmed whether a device uses the present disclosure based on the method.

As described above, according to the exemplary embodiments of the present disclosure, it is possible to operate the separable secure module functions such as DVB/CI+ and CableCard only by connecting between the authentication devices (ex. USBCAM) without adding the circuit design or the separate hardware in the broadcast receiving apparatus having the USB port.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving apparatus, comprising:
a broadcast signal receiver configured to receive a broadcast signal;
a memory configured to store the received broadcast signal;
an interface unit configured to communicate with an external authentication device; and
a memory controller configured to control the interface unit to transmit the broadcast signal stored in the memory to the external authentication device in a chunk having a preset size, when a size of the broadcast signal stored in the memory exceeds the preset size.

2. The broadcast receiving apparatus as claimed in claim 1, wherein the memory controller is configured to control the interface unit to receive an encrypted broadcast signal from the authentication device in the chunk having the preset size when the authentication device encrypts the broadcast signal and transmits the encrypted broadcast signal, and to store the encrypted broadcast signal received in the chunk having the preset size in the memory.

3. The broadcast receiving apparatus as claimed in claim 2, wherein the memory includes:
a TX buffer configured to store the broadcast signal received by the broadcast signal receiver; and
an RX buffer configured to store the encrypted broadcast signal received from the authentication device, and
wherein the memory controller is configured to read the broadcast signal from a specific address of the TX buffer in the chunk having the preset size, to transmit the read broadcast signal to the authentication device, and to write the encrypted broadcast signal received from the authentication device in the chunk having the preset size in the specific address of the RX buffer.

4. The broadcast receiving apparatus as claimed in claim 3, further comprising:
a demultiplexer configured to decode the encrypted broadcast signal; and
a main controller configured to control a function of the broadcast receiving apparatus,
wherein the main controller is configured to output the encrypted broadcast signal stored in the chunk unit having the preset size to the demultiplexer in a basic transmission unit, and
the basic transmission unit is a size of a packet at which the broadcast signal is transmitted to the broadcast signal receiver.

5. The broadcast receiving apparatus as claimed in claim 4, wherein the chunk is a multiple of the basic transmission unit, and the main controller is configured to divide the broadcast signal in the chunk unit, which is written in a specific address of the RX buffer, into the basic transmission unit and sequentially output the divided broadcast signal to the demultiplexer.

6. The broadcast receiving apparatus as claimed in claim 4, wherein when the broadcast signal receiver receives a plurality of broadcast signals, the memory includes TX buffers and RX buffers equal to a number of received broadcast signals,
the main controller configures twice as many endpoints as the number of received broadcast signals, and
the memory controller controls the interface unit to allocate two endpoints to each broadcast signal so as to transmit and receive the broadcast signals.

7. The broadcast receiving apparatus as claimed in claim 4, further comprising:
a communication stack configured to transmit and receive a message,
wherein the main controller controls the communication stack to transmit and receive a protocol message for encryption and decoding of the broadcast signals to and from the authentication device.

8. The broadcast receiving apparatus as claimed in claim 7, further comprising:
a nonvolatile memory configured to store data independent of a supply of power,
wherein the protocol message includes a certificate, a public key, an electronic signature of the public key of the authentication device and the broadcast receiving apparatus, respectively, and
the main controller creates an authentication key and stores the created authentication key in the nonvolatile memory when the certificate and the electronic signature of the public key are verified.

9. The broadcast receiving apparatus as claimed in claim 7, wherein the main controller controls the communication stack to create a session key and to transmit and receive a sync message of the session key to and from the authentication device, controls the communication stack to receive encrypted transport stream key (TS) key, and decodes the TS key using the session key and transmits the decoded TS key to a decoder in the demultiplexer, and
the decoder in the demultiplexer uses the decoded TS key to decode the encrypted broadcast signals in the authentication device.

10. The broadcast receiving apparatus as claimed in claim 1, wherein the interface unit is a USB interface and transmits and receives data to and from the external authentication device using a USB communication scheme.

11. A method for controlling a broadcast receiving apparatus, the method comprising:
receiving a broadcast signal in the broadcast receiving apparatus;
storing the received broadcast signal in a memory of the broadcast receiving apparatus; and
transmitting the stored broadcast signal from the broadcast receiving apparatus to an external authentication device in a chunk having a preset size when a size of the broadcast signal exceeds the preset size.

12. The method as claimed in claim 11, further comprising:
receiving an encrypted broadcast signal from the authentication device in the chunk having the preset size when the authentication device encrypts the broadcast signal and transmits the encrypted broadcast signal; and
storing the encrypted broadcast signal received in the chunk having the preset size.

13. The method as claimed in claim 12, wherein in the transmitting, the broadcast signal is read from a specific address of a TX buffer storing the received broadcast signal in the chunk having the preset size and is transmitted to the authentication device, and
in the storing of the encrypted broadcast signal, the encrypted broadcast signal received from the authentication device in the chunk having the preset size is written in a specific address of an RX buffer storing the encrypted broadcast signal received from the authentication device.

14. The method as claimed in claim 13, further comprising:
outputting the encrypted broadcast signal stored in the chunk unit having the preset size to the demultiplexer in a basic transmission unit; and
decoding the encrypted broadcast signal,
wherein the basic transmission unit is a size of a packet at which the broadcast signal in the receiving of the broadcast signal is transmitted to the broadcast receiving apparatus.

15. The method as claimed in claim 14, wherein the chunk is a multiple of the basic transmission unit, and
the broadcast signal in the chunk unit written in a specific address of the RX buffer is divided into a basic transmission unit and the divided basic transmission unit is sequentially output.
